# EUROPÄISCHE PATENTANMELDUNG

(11) **EP 2 263 777 A1**
(43) Veröffentlichungstag der Anmeldung: **22.12.2010**
(21) Anmeldenummer: 10166574.3
(22) Anmeldetag: 18.06.2010
(51) Int. Cl.: B01D 46/30, B01D 53/86, B01D 46/00, B01D 46/34, B01D 53/88, B01D 53/04

(54) **Filtervorrichtung, enthaltend eine Schüttung aus Katalysatormaterial in einem schrägen Bett mit darunterliegenden Strömungsbeeinflussungsvorrichtungen**

(30) Priorität: 20.06.2009 DE 102009025680
(71) Anmelder: Haliotis Asia Pte. Ltd., Singapur 079903 (SG)
(72) Erfinder: Paessler, Karlheinz Dr., 52396, Heimbach (DE)
(74) Vertreter: Baronetzky, Klaus

(57) **Zusammenfassung**

Die Erfindung betrifft eine Filtervorrichtung für insbesondere mehrfach verunreinigte Gase, mit einem schrägen Bett mit einer Schüttung aus Katalysatormaterial, welches Bett an seiner unteren Längsseite eine Rückhaltewand aufweist, wobei im Bereich einer Stirnseite des Betts ein Reingasauslass ausgebildet ist, der das Gas ausgibt, das die Schüttung durchtreten hat, und wobei ein Spülgaseinlass ebenfalls im Bereich einer Stirnseite des Betts ausgebildet ist, wobei der Spülgaseinlass (40) und der Reingasauslass (36) an der gleichen Stirnseite (38) ausgebildet sind und wobei unter dem Bett (12) zwischen beiden Stirnseiten verteilt Strömungsbeinflussungsvorrichtungen (50) gelagert sind, die insbesondere Strömungspeaks bei der Durchströmung des Betts (12) durch Spülgas vermeiden oder zumindest reduzieren.

## Beschreibung

Die Erfindung betrifft eine Filtervorrichtung, gemäß dem Oberbegriff von Anspruch 1.

Eine derartige Filtervorrichtung ist beispielsweise aus der DE 10 2005 022 138 A1 bekannt. Diese Filtervorrichtung zeichnet sich dadurch aus, dass sie für die Ausfilterung von Staub, Dioxinen, Stickoxiden oder dergleichen, insbesondere aus Hochofen-Abgasen oder Müllverbrennungsanlagen, besonders geeignet ist. Hierzu weist sie mehrere schräggestellte Betten auf, die mit einer Schüttung aus Katalysatormaterial versehen sind. An der unteren Längsseite des Betts steht das Katalysatormaterial je an einer Rückhaltewand an, und das Bett wird von oben nach unten durchströmt, um die gewünschte Filterwirkung zu erzielen.

Wenn das Katalysatormaterial sich zusetzt, insbesondere durch den anfallenden Staub, wird ein Spülgas von unten nach oben durch das Bett geleitet. Hierdurch wird die oberste und verdichtete Schicht des Katalysatormaterials leicht angehoben und rutscht über die Rückhaltewand ab.

Es versteht sich, dass für den optimalen Betrieb der Schüttwinkel des Schüttguts dem Neigungswinkel der Schrägstellung des Betts entsprechen muss.

Für den großtechnischen Betrieb weisen derartige Filtervorrichtungen eine beträchtliche Länge auf. Beispielsweise kann ein Bett in Längsrichtung 6 Meter oder beispielsweise sogar 10 Meter lang sein, wobei die Breite dann beispielsweise einen Meter betragen kann. Das in Querrichtung betrachtet schräg stehende Bett wird dann von dem Spülgas über seine gesamte Länge, also über 6 oder 10 Meter, unterströmt, und das Spülgas tritt nach und nach von unten durch das Bett hindurch.

Um ein sicheres Abheben der Verdichtungsschicht zu gewährleisten, ist es vorgeschlagen worden, mit Spülgasimpulsen zu arbeiten. Dies verbessert die Gleichmäßigkeit der Ablösung der Verdichtungsschicht etwas, aber die so erzeugte Druckwelle führt dazu, dass auch an sich noch nicht verbrauchtes Katalysatormaterial weggeschleudert wird, so dass zu viele Verluste entstehen.

Um die Reinigung der Schüttung zu verbessern, ist es auch vorgeschlagen worden, seitlich, also etwa entlang der unteren Längsseite des Betts, Spülgaseinlässe anzubringen. Dies ist jedoch aus prozesstechnischen Gründen ungünstig, denn derartige Einlässe werden dann leicht von der abrutschenden Verdichtungsschicht verunreinigt, und wenn der Spülgasimpuls sehr kurz gehalten ist, so dass das Spülgas nicht mehr strömt, wenn die Verdichtungsschicht abrutscht, geraten unweigerlich Reste des verdichteten Granulats in die Spülgasöffnungen hinein. Zudem bedingen eine Vielzahl von Spülgas-Anschlussstutzen an der Außenseite des Filterkastens eine entsprechende Anzahl von Abdichtungen, Rohrumlenkungen und Verzweigungen und sind insofern ungünstig zu realisieren.

Demgegenüber liegt der Erfindung die Aufgabe zugrunde, eine Filtervorrichtung gemäß dem Oberbegriff von Anspruch 1 zu schaffen, die einen zuverlässigen Reinigungsbetrieb ermöglicht, ohne dass Zusatzkosten entstehen, wobei dennoch die Langlebigkeit der Filtervorrichtung gerade auch bei schwefel- und chlorhaltigen Abgasen verbessert werden soll.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, den Spülgaseinlass an der gleichen Seite wie den Reingasauslass vorzusehen. Das Reingas verlässt den Filterkasten mit einer Temperatur, die nicht nennenswert unter der Einlasstemperatur der verunreinigten Gase liegt, beispielsweise also mit 160° Celsius. Diese Temperatur ist deutlich oberhalb des Taupunktes von Schwefel, so dass Kondensation zu Schwefelsäure auch an so genannten "kalten Stellen" nicht möglich ist. Überraschend wird das Spülgas durch die Zufuhr im "Gegenstromprinzip" so weit angewärmt, dass auch das Spülgas mit entsprechend erhöhter Temperatur ansteht.

In vorteilhafter Ausgestaltung wird als Spülgas das Reingas verwendet, das aus parallelen Betten abgezweigt ist. Dieses Reingas weist ohnehin die erwünschte Temperatur von etwa 160° auf, wobei sich versteht, dass auch eine Temperatur von beispielsweise 130° grundsätzlich ausreichend wäre.

Gegenüber an sich bekannten Filtervorrichtungen, die für mehrfach verunreinigte Gase geeignet sind und Temperaturen von etwa 320° bis 340° Celsius erfordern, ergibt sich so eine erhebliche Energieeinsparung, denn die an sich bekannten Filtervorrichtungen erfordern das Wiederanwärmen der Abgase.

Erfindungsgemäß besonders günstig ist es, wenn zusätzlich zur Anordnung von Spülgaseinlass und Reingasauslass an der gleichen Stirnseite des in Querrichtung betrachtet schräg stehenden Betts in dem Freiraum unter dem Bett Strömungsbeeinflussungsvorrichtungen angeordnet sind. Derartige Strömungsbeeinflussungsvorrichtungen dienen dann dazu, ein sicheres Abheben der Verdichtungsschicht über die gesamte und beträchtliche Länge des Betts zu gewährleisten, damit die Verdichtungsschicht insgesamt abrutschen kann, und nicht Teilstücke verbleiben.

Zwar weist die Verdichtungsschicht einen gewissen inneren Zusammenhalt auf. Sie neigt jedoch bei den bislang realisierten Filtervorrichtungen dazu, in Stücke gerissen zu werden, überraschend gerade an der dem Spülgaseinlass gegenüberliegenden Stirnseite. Erfindungsgemäß wird nun der an sich erwünschte Spülgasimpuls praktisch gebremst und dadurch wird in geeigneter Weise der offenbar punktuell dynamisch erzeugte Ablöseimpuls abgemildert. Möglicherweise entstand bislang aufgrund von Resonanzen eine stehende Welle, deren Schwingungsbäuche zur Partialablösung der Verdichtungsschicht führten, während erfindungsgemäß nun überraschend durch die Spülströmungsbeeinflussungsvorrichtungen die Ablöseimpulse reduziert werden bzw. "verschliffen" werden.

Überraschend ergibt sich dennoch ein zuverlässiges Ablösen der Verdichtungsschicht, auch wenn die Spitzen des Ablöseimpulses deutlich reduziert sind.

Überraschend ist hierfür bereits die Aufteilung des Spülgasstroms in Einzelströme geeignet, wozu die beispielshaft als Leitbleche ausgebildeten Strömungsbeeinflussungsvorrichtungen geeignet sind. Der Spülgasstrom wird durch derartige Leitbleche aufgeteilt und je in Einzelströmen dem Bett von unten zugeleitet. Die Leitbleche sind dann je günstigerweise unterhalb des betreffenden Betts angeordnet, aber nicht schräg unterhalb, so dass sie auch durch die abrutschende Verdichtungsschicht nicht betroffen sind.

Für die weitere Erläuterung wird auf die DE 10 2005 022 138 A1 vollinhaltlich Bezug genommen. Die Strömungsbeeinflussungsvorrichtungen vermeiden Strömungspeaks bei der Strömung des Betts durch das Spülgas, und es zeigt sich, dass überraschend hierdurch dann die Verdichtungsschicht insgesamt gleichsam als zusammenhängende Schicht leichter angehoben und damit abrutschen kann. Durch die Kappung der Peaks baut sich unterhalb der Verdichtungsschicht praktisch überall der gleiche Druck auf, der auch nicht durch durch Strömungspeaks oder -spitzen erzeugte Löcher in der Verdichtungsschicht entweichen kann.

Erfindungsgemäß ergibt sich damit überraschend eine zuverlässigere und verbesserte Reinigung der Schüttung.

In vorteilhafter Ausgestaltung ist es darüber hinaus vorgesehen, die Verdichtungsschicht, die in an sich bekannter Weise über eine Förderschnecke abgeführt wird, in einem Teilkreislauf zu verwenden und zu reinigen. Hierzu lässt sich dieser Teil beispielsweise auf eine erhöhte Temperatur von 300° erwärmen; der aufgefangene Staub kann ausgeblasen oder ausgewaschen werden und das durch die weitere Erwärmung entstehende verunreinigte Gas kann durch Re-Kondensation an einer kalten Stelle aufgefangen und abgeführt werden.

Dies lässt auch eine zumindest teilweise Wiederverwendung des Granulats zu, wobei bevorzugt in den Kreislauf frisches Granulat eingebracht wird.

Erfindungsgemäß ist es besonders günstig, dass mit einem kompakten Filterkasten eine Vielzahl von Verunreinigungen aus Abgasen ausgefällt werden können, so Dioxine und Furane, Stickoxide, Schwefelverbindungen, Chlorverbindungen, insbesondere aber auch Staub und bei Bedarf sogar CO.

Insbesondere ließen die bislang bekannten Denox-Filter nicht das gleichzeitige Ausfiltern von Staub zu, so dass insofern ein erheblicher Fortschritt besteht. Zudem sind die Herstellungskosten der erfindungsgemäßen Filtervorrichtung gegenüber klassischen Denox- oder Desox-Filtervorrichtungen um die Hälfte reduziert.

Erfindungsgemäß ist es in vorteilhafter Ausgestaltung günstig, wenn der Strömungsgradient reduziert ist und auch, wenn vertikale Vielfach-Kleinkanäle nebeneinander im Bett angeordnet sind. Die vertikalen Längs- und Querrippen erlauben eine Parallelisierung der Strömungen, auch wenn dies über lediglich wenige cm in der Höhe realisiert ist.

In einer modifizierten Ausgestaltung ist es vorgesehen, als Strömungsbeeinflüssungsvorrichtung einen Düsenwagen zu realisieren, der unter dem Bett in Längsrichtung entlang fährt. Er weist eine Schlitzdüse in Bettbreite, also beispielsweise 1 m auf, die von einer recht starken Strömung durchströmt wird. Hier wird in Abweichung zur vorliegenden Erfindung im Übrigen bewusst in Kauf genommen, dass die Verdichtungsschicht reißt. Die erzeugte Strömung ist jedoch so stark, dass dennoch keine Reste der Verdichtungsschicht verbleiben, wobei auch hier wiederum als Spülgas das Reingas paralleler Betten verwendet werden kann.

Weitere Vorteile, Einzelheiten und Merkmale ergeben sich aus der nachfolgenden Beschreibung mehrerer Ausführungsformen der Erfindung anhand der Zeichnung.

Es zeigen:
- Fig. 1: ein Schnitt durch eine erste Ausführungsform einer erfindungsgemäßen Filter- vorrichtung;
- Fig. 2: ein Längsschnitt durch die Ausführungsform gemäß Fig. 1;
- Fig. 3: eine schematische Ansicht einer weiteren Ausführungsform einer erfindungsge- mäßen Filtervorrichtung;
- Fig. 4: ein Schnitt durch die Ausführungsform gemäß Fig. 3 aus Sicht des Pfeils B in Fig. 3;
- Fig. 5: die Seitenansicht einer Ausführungsform der in einem Container aufgenommenen erfindungsgemäßen Filtervorrichtung;
- Fig. 6: Ansicht von links der Ausführungsform gemäß Fig. 5, mit angedeuteter Innenstruktur der erfindungsgemäßen Filtervorrichtung;
- Fig. 7: Schnitt durch die Ausführungsform gemäß Fig. 5 entlang der Schnittlinie A-A in Fig. 6;
- Fig. 8: Schnitt durch die Ausführungsform gemäß Fig. 5 entlang der Schnittlinie C-C in Fig. 6;
- Fig. 9: Ansicht von rechts der Ausführungsform gemäß Fig. 5;
- Fig. 10: Draufsicht der Ausführungsform gemäß Fig. 5;
- Fig. 11: Schnitt durch die Ausführungsform gemäß Fig. 5 entlang der Schnittlinie B-B in Fig. 10;
- Fig. 12: die Ansicht von unten der Ausführungsform gemäß Fig. 5;
- Fig. 13: perspektivischer Schnitt durch die Ausführungsform gemäß Fig. 5 entlang der Schnittlinie D-D in Fig. 6; und
- Fig. 14: Perspektivische Ansicht des Containers gemäß Fig. 5.

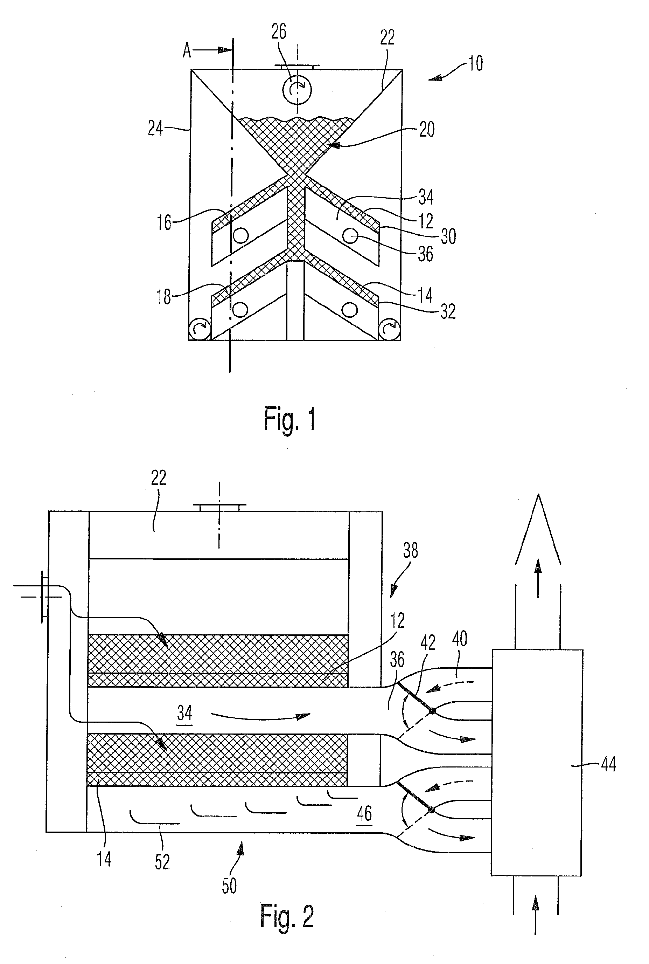

Die in Fig. 1 dargestellte Ausführungsform einer erfindungsgemäßen Filtervorrichtung 10 weist mehrere schräge Betten 12, 14, 16 und 18 auf, die sich in dem dargestellten Ausführungsbeispiel tannenbaumartig erstrecken. Es ist eine Schüttung 20 aus Katalysatormaterial vorgesehen, die in einem Einführtrichter 22 über die Länge des Filterkastens 24 gleichmäßig zugeführt wird. Der Einzeltrichter 22 ist hierzu mit einer Dosierschnecke 26 versehen, die sich in Längsrichtung des Filterkastens 24 erstreckt und der gleichmäßigen Abgabe der Schüttung 20 dient.

In an sich bekannter Weise rutscht das Katalysatormaterial der Schüttung 20 auf die Betten 12 bis 18, wobei die Neigung der Betten dem Schüttwinkel des Katalysatormaterials entspricht. An der unteren Längsseite 30 jedes Betts ist eine Rückhaltewand 32 ausgebildet, die nicht senkrecht ausgestaltet sein muss, sondern die sich beispielsweise auch waagerecht erstrecken kann, wie es aus der vorstehend genannten Offenlegungsschrift ersichtlich ist, auf die vollinhaltlich Bezug genommen wird.

Unterhalb jedes Betts ist ein Freiraum, also beispielsweise der Freiraum 34 unterhalb des Betts 12, ausgebildet, welcher jeweils an seiner Unterseite sowie an allen Stirnseiten gasdicht geschlossen ist. Der Freiraum 34 ist im Querschnitt parallelepiped-förmig und weist eine Breite von etwa 1 m - entsprechend der Breite des Betts - auf. Das Bett 12 weist einen Rost aus einem Gitter auf, wobei die Längs- und Querrippen eine Höhe von je etwa 3 cm aufweisen. Dieser Rost ist von einem großflächigen Sieb abgedeckt, das die Schüttung hält.

Im Normalbetrieb wird nun das Bett 12 vom Gas von schräg oben nach schräg unten durchtreten, also von oberhalb des Betts 12 in den Freiraum 34 hinein. So wird ein Reingas erzeugt, das über den Reingasauslass 36 austritt. Im Normalbetrieb oder Filterbetrieb sammelt sich der eintretenden Staub auf der Oberseite der Schüttung des Betts 12, so dass dort eine Verdichtungsschicht entsteht.

Im Reinigungsbetrieb wird nun die Strömungsrichtung durch das Bett 12 umgekehrt, und Spülgas tritt in den Freiraum 34 ein und durchströmt das Bett 12 von unten nach oben.

Aus Fig. 2 ist die erfindungsgemäße Anordnung im Einzelnen ersichtlich. Das Reingas strömt aus dem Freiraum 34 durch den Reingasauslass 36 ab. Im Bereich der gleichen Stirnseite 38 des Betts 12 ist ein Spülgaseinlass 40 ausgebildet, wobei über eine Umschaltklappe 42 zwischen Spülgas und Reingas umschaltbar ist. Die Strömung des Spülgases ist mit gestrichelten Linien dargestellt, während die Strömung des Reingases mit einem durchgezogenen Pfeil dargestellt ist.

Anschließend an die Spülgaseinlässe und die Reingasauslässe ist ein Sammel- und Schaltkasten 44 vorgesehen. Mit dem Sammel- und Schaltkasten 44 wird wahlweise eines der Betten auf Reinigungsbetrieb umgeschaltet. Hierzu wird das Reingas aus drei Betten gesammelt und ein Teil des Reingases als Spülgas dem Bett 12 zugeleitet, wobei die Umschaltklappe 42 in die gestrichelte Stellung verbracht wird und das Spülgas über den Spülgaseinlass 40 dem Freiraum 34 zugeleitet wird.

Jeder Freiraum weist Strömungsbeeinflussungsvorrichtungen 50 auf, wobei diese beispielhaft für den Freiraum 46 dargestellt sind. Im dargestellten Ausführungsbeispiel sind über die Länge des Betts 14, also etwa über 6 m verteilt, Luftleitbleche 52 vorgesehen, die den eintretenden Spülgasstrom in Einzelströme aufteilen und von schräg unten dem Bett 14 zuleiten. Überraschend führt dies dazu, dass die auf dem Bett 14 abgelagerte Verdichtungsschicht gleichmäßig angehoben wird und damit besser abrauscht.

Es versteht sich, dass anstelle dessen beliebige andere Strömungsbeeinflussungsvorrichtungen vorgesehen sein können. Beispielsweise kann über Rippen, Lochblenden oder dergleichen ein Strömungswiderstand bereitgestellt oder eine Luftumleitung realisiert werden.

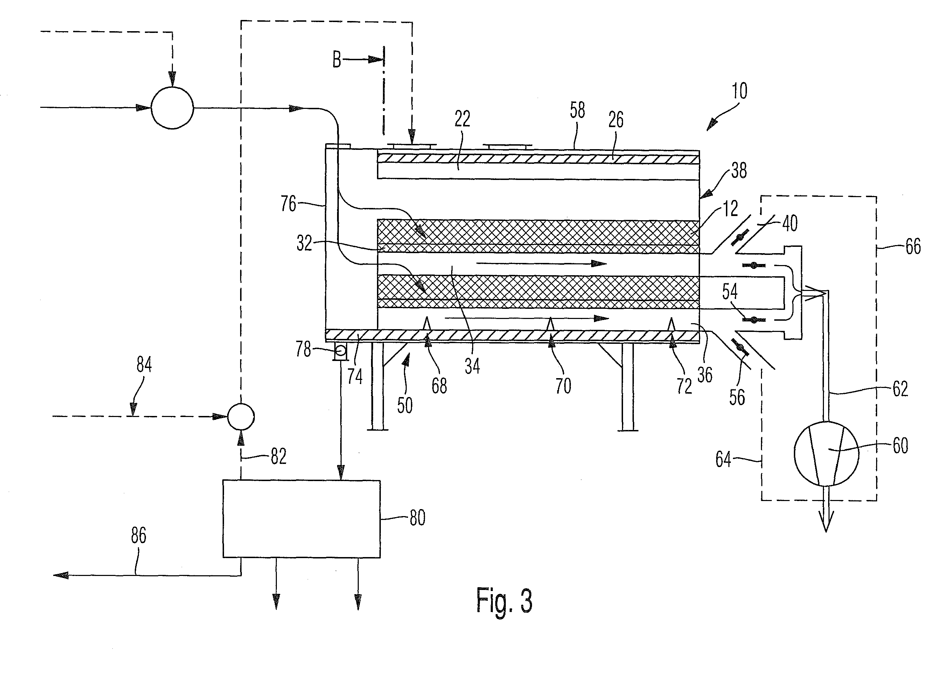

Aus Fig. 3 ist ersichtlich, dass sowohl für das Granulat ein Teilkreislauf als auch für das Reingas ein Teilkreislauf gebildet sein kann. Gleiche Bezugszeichen weisen hier wie auch in weiteren Figuren auf gleiche Teile hin. Anstelle der Umschaltklappe 42 ist bei dieser Ausführungsform eine Schaltklappe 54 für Reingas und eine Schaltklappe 56 für Spülgas ausgebildet. Reingasauslass 36 und Spülgaseinlass 40 sind anschlusstechnisch kombiniert, und die Verzweigung erfolgt wenige Zentimeter nach dem Anschluss an der Stirnseite 38 des Filterkastens 58. Wie ersichtlich ist, lässt sich die erfindungsgemäße Filtervorrichtung 10 im Wesentlichen in einem quaderförmigen Filterkasten 58 unterbringen, der beispielsweise eine Breite von etwas mehr als 2 m, eine Höhe von 3 m und eine Länge von 6 m haben kann, um eine kleinere Müllverbrennungsanlage zu bedienen, also in einem anders üblichen Standard-Container unterbringbar ist.

Die Separierung der Umschaltklappe 42 in einzelne Schaltklappen 54 und 56 erlaubt es auch, gezielt den Reinigungsbetrieb eines der Betten einzuschalten. Im Filterbetrieb sind sämtliche vier Schaltklappen 56 geschlossen und sämtliche vier Schaltklappen 54 offen. Im Reinigungsbetrieb ist die Schaltklappe 56 eines Betts geöffnet und dementsprechend die Schaltklappe 54 dieses Betts geschlossen. Über einen Verdichter 60 wird der Druck des Reingases 62 erhöht, und ausgangsseitig des Verdichters zweigen Leitungen 64 und 66 ab, die je mit den Spülgaseinlässen 40 verbunden sind. Bei geöffneter Schaltklappe 56 strömt daher das verdichtete Reingas als Spülgas durch den betreffenden Spülgaseinlass 40 in den Freiraum 34. Dort trifft es auf Strömungsbeeinflussungsvorrichtungen 50, die im dargestellten Ausführungsbeispiel über verteilt angeordnete Strömungswiderstände 68, 70, 72 realisiert sind. Die rippenförmigen Strömungswiderstände 68 bis 72 brechen den Spülgasimpuls, so dass keine Strömungsspitze das Bett durchtritt.

Aus Fig. 3 ist ferner ersichtlich, dass das über die Rückhaltewand 32 abrutschende verdichtete Granulat über eine Förderschnecke 74 abgeführt wird. Es wird im Bereich der

Stirnseite 76 des Filterkastens 58 gesammelt und verlässt den Filterkasten 58, wenn ein Drehventil 78 geöffnet wird. In einem Aufbereitungskasten 80 wird das verdichtete Granulat in geeigneter Weise aufbereitet, beispielsweise durch Waschen, Sieben und/oder Erhitzen. Die geeigneten Teile des Granulats verlassen den Aufbereitungskasten 80 über eine Rückführleitung 82. Frisches Granulat bzw. Katalysatormaterial wird über eine Zuleitung 84 zugeführt und gemeinsam mit dem rückgeführten Granulat dem Einführtrichter 22 im Kreislauf zugeleitet.

Im Aufbereitungskasten 80 wird ferner das verbrauchte Granulat abgeschieden und über eine Leitung 86 abgegeben. Staub und schwefel-, chlor-, und/oder fluorhaltiges Gas werden durch Verdampfen der betreffenden Salze erzeugt und abgezogen und ggf. bei Bedarf separat kondensiert.

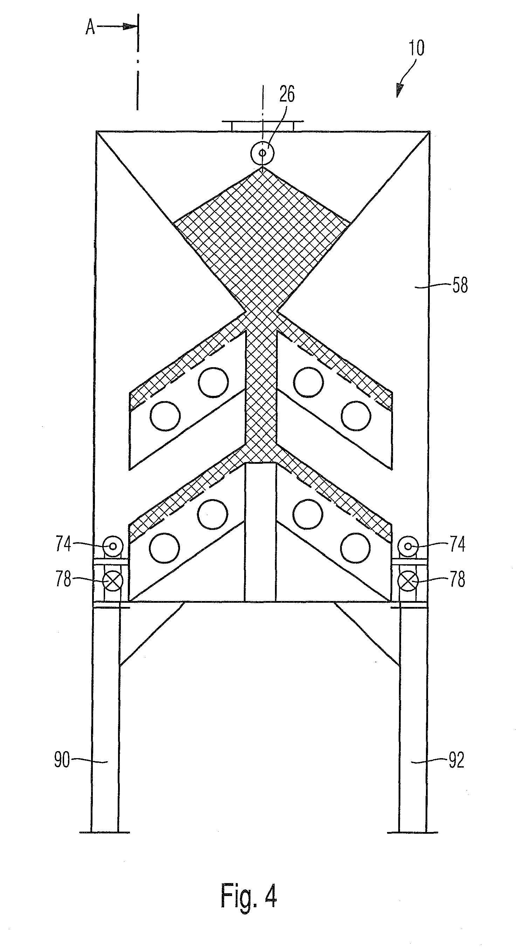

Aus Fig. 4 ist ersichtlich, dass sowohl die Förderschnecken 74 als auch die Drehventile 78 beidseitig des Filterkastens 58 angeordnet sind; es ist auch ersichtlich, dass die erfindungsgemäße Filtervorrichtung 10 über Stützen 90 und 92 kompakt aufgestellt sein kann.

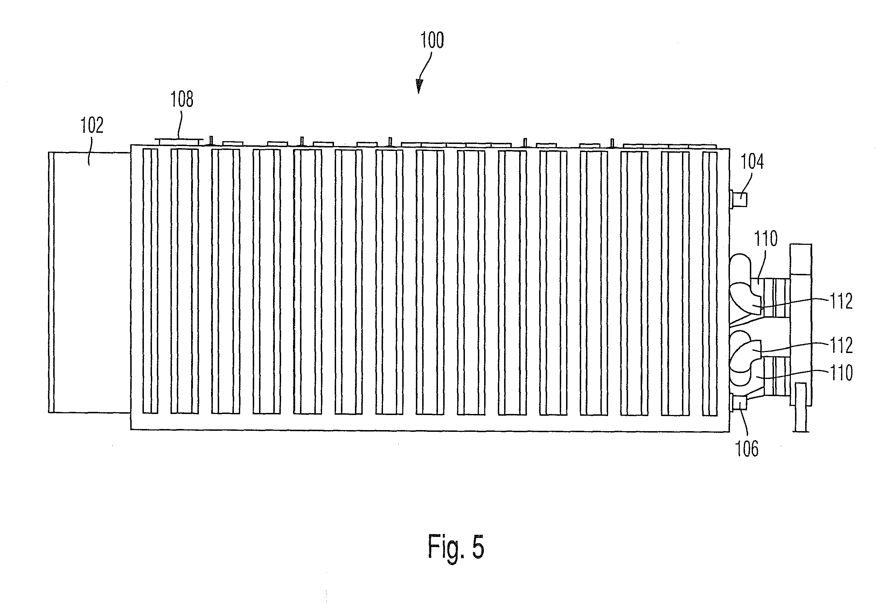

Fig. 5 zeigt die Seitenansicht eines Standardcontainers 100, welcher hier die Funktion des Filterkastens 24 aus Fig. 1 erfüllt, mit geöffneten stirnseitigen Türen 102. An der gegenüberliegenden Stirnseite des Containers 100 sind der Antriebsmotor 104 der Dosierschnecke 26, einer der beiden Antriebsmotoren 106 der Förderschnecken 74 sowie einer der beiden Rohgaseinlässe 108 und die Reingasauslässe 110 und die Spülgaseinlässe 112 erkennbar.

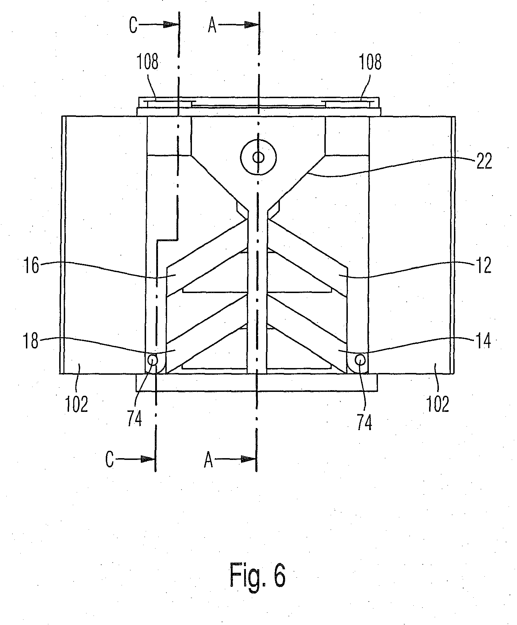

In Fig. 6 sind neben den beiden Rohgaseinlässen 108 die Betten 12, 14, 16, 18 sowie der Einführtrichter 22 und die Förderschnecken 74 angedeutet.

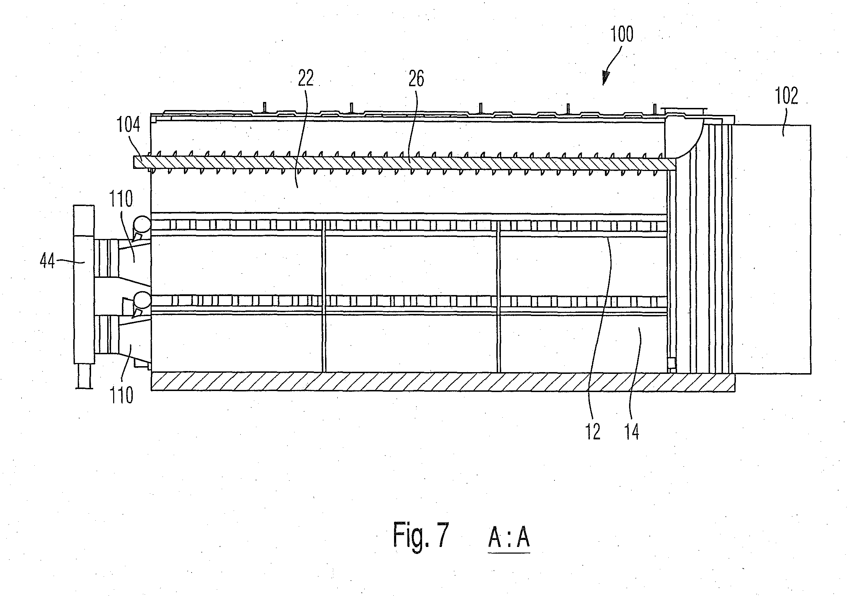

Aus Fig. 7 ist deutlich zu erkennen, wie sich die Dosierschnecke 26 über die gesamte Länge der Betten, von denen die Betten 12 und 14 erkennbar sind, erstreckt. Die Dosierschnecke 26 wird mit dem außerhalb des Containers 100 angebrachten Motor 104 angetrieben, um den in den Einführtrichter 22, dessen eine Wand hinter der Dosierschnecke 26 dargestellt ist, geschütteten Katalysator über die gesamte Länge der Betten gleichmäßig zuzuführen. An der gleichen Stirnseite des Containers 100, unterhalb des Dosierschneckenmotors 104 sind weiter die Reingasauslässe 110 zu erkennen, welche in den gemeinsamen Sammel- und Schaltkasten 44 münden, an dem gesammelt das gereinigte Gas aller vier Filterbetten abgenommen werden kann.

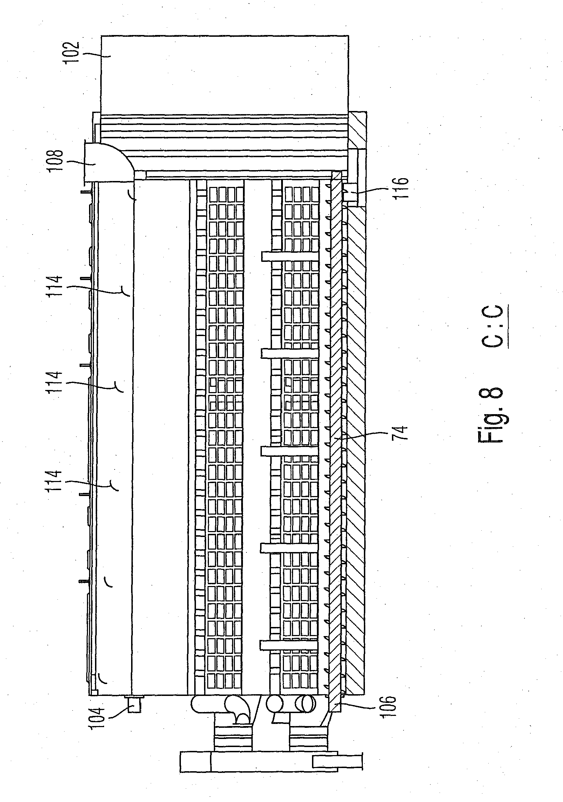

In Fig. 8 sind unterhalb der Containerdecke Strömungsbeeinflussungsvorrichtungen 114, die der Vergleichmäßigung der Strömung des eingeleiteten Rohgases dienen, zu sehen. Weiterhin gut erkennbar ist in Fig. 8 eine der beiden Förderschnecken 74 (hier geschnitten dargestellt), die sich ebenfalls über die gesamte Länge der Betten 12, 14, 16, 18 erstrecken. Mithilfe der Förderschnecken 74 und deren Antriebsmotoren 106 wird das verbrauchte Katalysatormaterial abtransportiert und einer möglichen Aufbereitung zugeführt. Durch die Öffnungen 116 im Boden des Containers wird das verbrauchte Katalysatormaterial aus dem Containerinneren abgeführt.

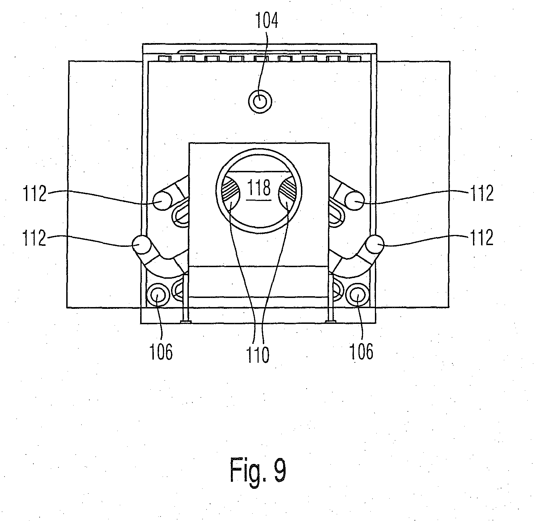

Aus Fig. 9 ist deutlich der Sammelkasten 44 erkennbar. An die kreisrunde Öffnung 118 kann beispielsweise eine Leitung zur Weiterleitung des Reingases angeflanscht werden. In der kreisrunden Öffnung 118 sind zwei der ingsesamt vier sich auf die Breite der unter den Filterbetten befindlichen Freiräume 34 erweiternden Reingasauslässe 110 erkennbar. Die sich jeweils oberhalb der einzelnen Reingasauslässe befindenden geneigten Rohrleitungen 112 dienen der Zuleitung des Spülgases zu den einzelnen Filterbetten. An den unteren beiden Ecken des Containers sind gut die Antriebsmotoren 106 der Förderschnecken 74 erkennbar. Im oberen Teil mittig ist weiterhin deutlich der Antriebsmotor 104 für die Dosierschnecke 26 erkennbar.

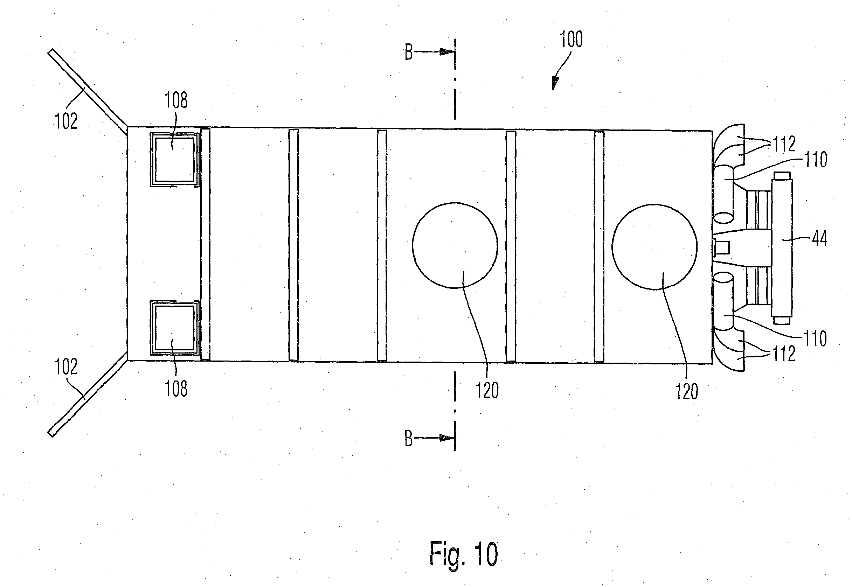

Fig. 10 zeigt die Draufsicht auf den Container 100, auf dessen Oberseite die zwei Rohgaseinlässe 108 sowie zwei (hier mit Platten verschlossenen) Flanschöffnungen 120 zum Einfüllen des Katalysators zu sehen sind. Auf der rechten Seite sind deutlich die sich zum gemeinsamen Schalt- und Sammelasten 44 hin verjüngenden Reingasauslässe 110 und die vier Spülgaseinlässe 112 zu erkennen.

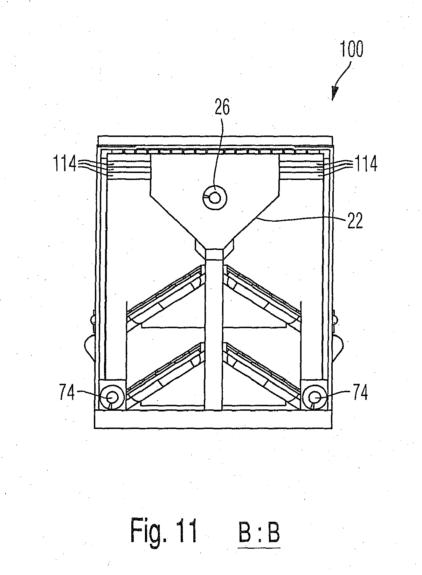

Fig. 11 stellt den Container 100, geschnitten entlang der Linie B-B in Fig. 10, dar. Deutlich sind die beiden Förderschecken 74 links und rechts am Boden des Containers 100 sowie die Dosierschnecke 26 im Zentrum des Zuführtrichters 22 zu erkennen. Durch Vor- und Rückwärtsbewegungen der Dosierschnecke 26 kann in einer bevorzugten Ausführungsform das Katalysatormaterial sowohl zum vorderen wie auch zum hinteren Ende des Zuführtrichters 22 bewegt werden, um eine gute Gleichverteilung der Menge des Katalysatormaterials über die gesamte Länge des Zuführtrichters 22 sicherzustellen. Unmittelbar unterhalb der Containerdecke, rechts und links neben dem Zuführtrichter, sind weiterhin die Lamellen der Strömungsbeeinflussungsvorrichtungen 114 für die Vergleichmäßigung des Rohgaszustroms erkennbar.

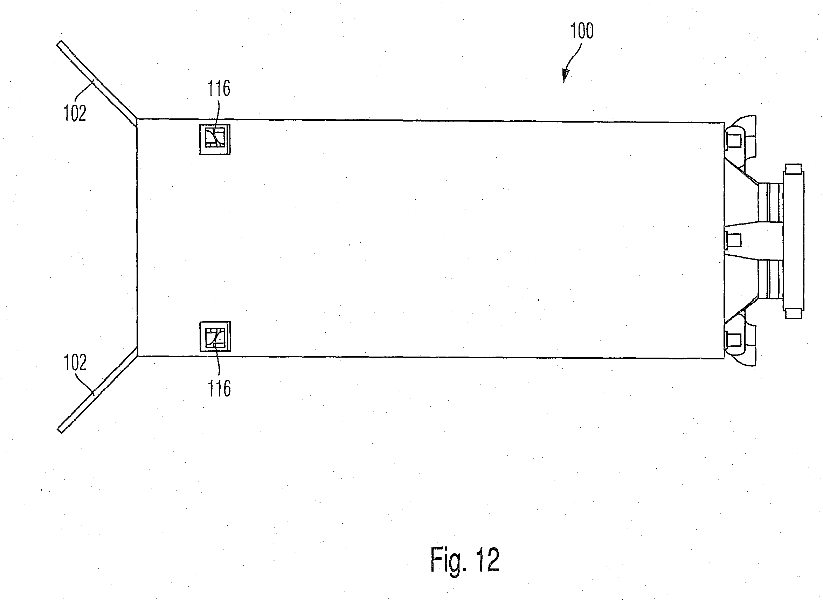

Aus Fig. 12 sind noch einmal gut die Auslassöffnungen 116 für das verbrauchte Katalysatormaterial im Boden des Containers 100 zu erkennen. Hier können in einer weiteren bevorzugten Ausführungsform Vorrichtungen zur Wiederaufbereitung des Katalysatormaterials angeschlossen werden, um dieses für eine neuerliche Verwendung dem erfindungsgemäßen Filter wieder zuzuführen.

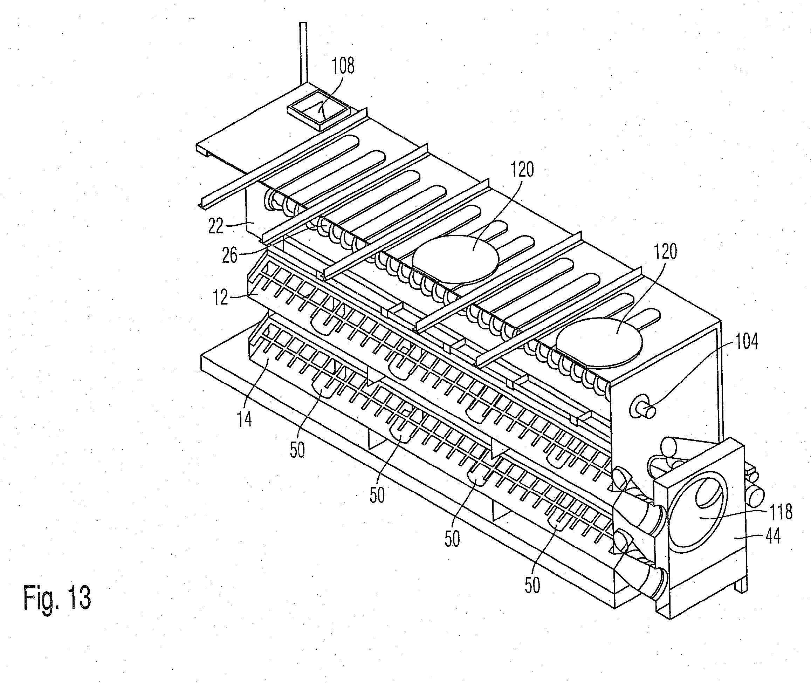

Aus Fig. 13 sind, neben der in dem Zuführtrichter 22 befindlichen Dosierschnecke 26, die unterhalb der Gitterroste der (hier dargestellten) Filterbetten 12, 14 angeordneten Strömungsbeeinflussungsvorrichtungen 50, welche in der dargestellten Ausführungsform lamellenförmig ausgeführt sind, und welche aus Gründen der Übersichtlichkeit lediglich für das Bett 14 beschriftet sind, zu erkennen. Durch diese Strömungsbeeinflussungsvorrichtungen 50 wird der Spülgasimpuls einerseits über die gesamte Länge der Filterbetten vergleichmäßigt und andereseits die Flanke des einsetzenden Spülgasflusses »verflacht«, was erfindungsgemäß überraschend zu einem großflächigen Abheben der Verdichungsschicht des Katalysatormaterials auf den zu reinigenden Filterbetten führt.

In einer weiteren modifizierten (nicht dargestellten) Ausführungsform kann das von oben in den Container eintretende Rohgas zuerst das obere Filterbett durchtreten, dann durch geeignete Abtrennvorrichtungen, anstatt über den Reingasauslass sofort aus dem Containerinneren abgeführt zu werden, dem unteren Filterbett zur weiteren Reinigung des nun schon vorgereinigten Gases zugeführt werden und auf diese Weise zwei Filterbetten kaskadiert und die Reinigungswirkung signifant gesteigert werden. Es versteht sich, dass zu diesem Zweck eine Seitenwand des sonst gasdichten Freiraums unter dem oberen Filterbett Öffnungen aufweisen muss, durch welche das vorgereinigte Gas über die erwähnten Abtrennvorrichtungen zum zweiten Filterbett strömen kann.

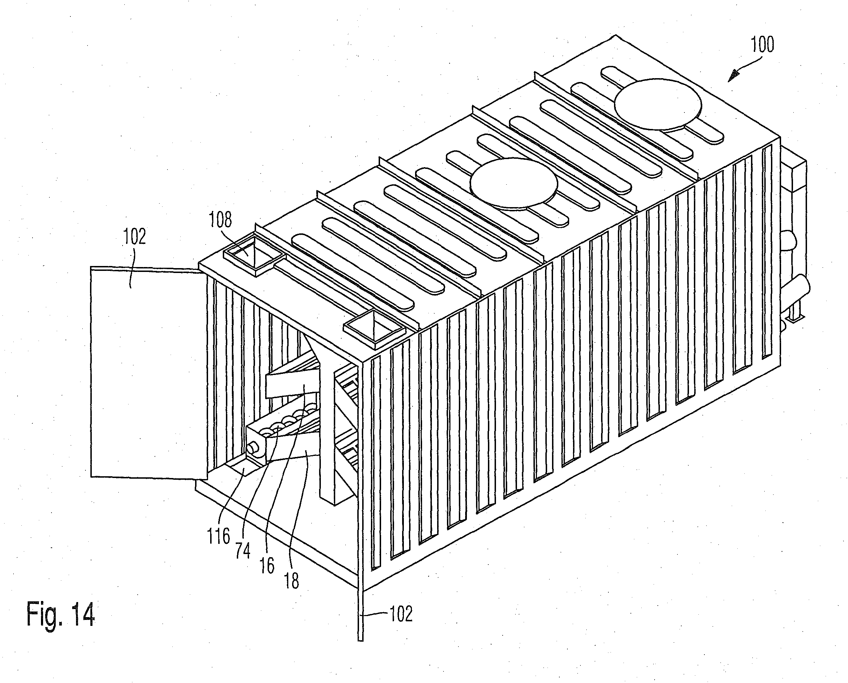

Fig. 14 stellt noch einmal eine perspektivische Ansicht der Ausführungsform des erfindungsgemäßen Filters in dem Standardcontainer 100 dar. Gut erkennbar ist die hintere Förderschnecke 74, welche verbrauchtes und von den Filterbetten16 und 18 abgerauschtes Katalysatormaterial über die Auslassöffnung 116 im Boden des Containers nach außen abführt.

## Patentansprüche

1. Filtervorrichtung für insbesondere mehrfach verunreinigte Gase, mit einem schrägen Bett mit einer Schüttung aus Katalysatormaterial, welches Bett an seiner unteren Längsseite eine Rückhaltewand aufweist, wobei im Bereich einer Stirnseite des Betts ein Reingasauslass ausgebildet ist, der das Gas ausgibt, das die Schüttung durchtreten hat, und wobei ein Spülgaseinlass ebenfalls im Bereich einer Stirnseite des Betts ausgebildet ist, **dadurch gekennzeichnet, dass** unter dem Bett, insbesondere (12) zwischen beiden Stirnseiten verteilt, Strömungsbeinflussungsvorrichtungen (50) gelagert sind, die insbesondere Strömungspeaks bei der Durchströmung des Betts (12) durch Spülgas vermeiden oder zumindest reduzieren, und insbesondere, dass der Spülgaseinlass (40) und der Reingasauslass (36) an der gleichen Stirnseite (38) ausgebildet sind.

2. Filtervorrichtung nach Anspruch 1, **dadurch gekennzeichnet, dass** der Spülgaseinlass und der Reingasauslass (36) unterhalb des Betts (12) ausgebildet sind und in einen Freiraum (34) münden, der die Strömungsbeinflussungsvorrichtungen (50) aufweist;
dass das schräge Bett sich oberhalb eines im Querschnitt parallelepiped-förmigen Freiraums (34) erstreckt, dessen eine Stirnseite (38) geschlossen und dessen eine andere Stirnseite mit dem Reingasauslass (36) und dem Spülgaseinlass (40) versehen ist; und/oder
dass der Reingasauslass (36) und der Spülgaseinlass (40) über einen Anschlussschlutzen realisiert sind.

3. Filtervorrichtung nach einem der vorhergehenden Ansprüche, **dadurch gekennzeichnet, dass** mehrere Betten (12, 14, 16 und 18) in zueinander entsprechender Weise über- und/oder nebeneinander angeordnet sind und Umschaltvorrichtungen aufweisen, so dass ein Bett (12) im Reinigungsbetrieb und die übrigen Betten (14, 16 und 18) im Filterbetrieb betreibbar sind; und/oder
dass ein Sammelkasten für die Reingasauslässe der einzelnen Betten (12, 14, 16 und 18) vorgesehen ist, von dem insbesondere ein Spülgasanschluss abzweigt und dass als Spülgas Reingas der übrigen Betten verwendet ist.

4. Filtervorrichtung nach einem der vorhergehenden Ansprüche, **dadurch gekennzeichnet, dass** das verunreinigte Gas in einem Temperaturbereich von 110°C bis 220°C, insbesondere etwa 160°C, zugeführt ist, und die Filtervorrichtung (10) - auch an "kalten Stellen" - oberhalb des Chlortaupunkts und des Schwefeltaupunkts, insbesondere auf etwa 160°C, gehalten ist; und/oder
dass die Schüttung (20) Vanadiumpentoxid aufweist und Staub, NOx sowie Dioxine ausfiltert und/oder chemisch umwandelt und insbesondere granulatförmig ausgebildet ist.

5. Filtervorrichtung nach einem der vorhergehenden Ansprüche, **dadurch gekennzeichnet, dass** das Katalysatormaterial auch Schwefel und/oder Schwefelverbindung ausfiltert und dass die Verdichtungsschicht, die über die untere Längsseite (30) des Betts (12) abrutscht, aus einem Filterkasten (24) der Filtervorrichtung (10) in den Bereich einer Fördervorrichtung, insbesondere einer Förderschnecke, fällt.

6. Filtervorrichtung nach Anspruch 5, **dadurch gekennzeichnet, dass** die Fördervorrichtung das verdichtete Granulat einer Behandlungsvorrichtung zuleitet, die durch Erwärmen Schwefel- und/oder Chlorsalze verdampft und ableitet, insbesondere Staub absiebt oder auswäscht und, ggf. angereicht mit neuem Granulat, dem Filterkasten (24) erneut als neues Katalysatormaterial, insbesondere über eine Dosierschnecke (26), in gleichmäßig verteilter Weise zuleitet.

7. Filtervorrichtung nach einem der vorhergehenden Ansprüche, **dadurch gekennzeichnet, dass** ein Granulatkreislauf unter partieller Zufuhr von neuem Granulat und Abfuhr vom verbrauchten Granulat ausgebildet ist, durch welcher insbesondere im Betrieb ein Austausch des Katalysators ermöglicht ist und zusätzlich ein Reingas-/Füllgaskreislauf, in welchem Reingas aus einem Bett (12) einem zu reinigenden anderen Bett (14, 16, 18) zugeleitet wird.

8. Filtervorrichtung nach einem der vorhergehenden Ansprüche, **dadurch gekennzeichnet, dass** unter jedem Bett (12) ein Freiraum (34) ausgebildet ist, der in Längsrichtung des Betts (12) mit einer Spülgasströmung beaufschlagt ist, die nahe des Spülgaseinlasses (40) eine Geschwindigkeit von mehr als 10 m/s, insbesondere um 20 m/s, aufweist, wobei sich Strömungsbeeinflussungsvorrichtungen (50) über die gesamte Länge des Betts (12) erstrecken und den Spülgasstrom in Einzelströme aufteilen.

9. Filtervorrichtung nach einem der vorhergehenden Ansprüche, **dadurch gekennzeichnet, dass** die Strömungsbeeinflussungsvorrichtungen (50) Luftleitbleche (52) aufweisen, die als Umlenkbleche und/oder Strömungsaufteilungsbleche über die Länge des Freiraums (34) unterhalb des Betts (12) verteilt sind; und/oder
dass als Strömungsbeeinflussungsvorrichtung (50) Strömungswiderstände eingesetzt sind, insbesondere mindestens eine partielle Querschnittsverengung des Spülgasstroms.

10. Filtervorrichtung nach einem der vorhergehenden Ansprüche, **dadurch gekennzeichnet, dass** die Strömungsbeeinflussungsvorrichtung (50) in einen in Längsrichtung verfahrbaren Düsenwagen eingesetzt ist, der in Längsrichtung des Betts (12) betrachtet kurze Bereiche des Betts (12) gezielt mit Spülgas beaufschlagt.

11. Filtervorrichtung nach einem der vorhergehenden Ansprüche, **dadurch gekennzeichnet, dass** jedes Bett in seiner Basisfläche eine Mehrfachanordnung von Längs- und Querrippen, insbesondere in Gitterform, aufweist, welche Rippen eine vorgegebene Höhe von mindestens 2 cm, insbesondere etwa 5 cm und bevorzugt 10 cm, aufweist und mit welchen Rippen die Spülgasströmung in Einzelspülgasströme aufgeteilt und vertikal dem Katalysatormaterial zugeführt wird, wobei die Rippenanordnung bevorzugt von einem Sieb abgedeckt ist; und/oder
dass die Neigung der Rippen, die die Basis für das Bett (12) bilden, insbesondere an der dem Spülgaseinlass (40) benachbarten Seite des Betts, größer ist, wobei die Rippen in Spülgasströmungsrichtung geneigt sind, als auf der gegenüberliegenden Stirnseite (38) des Betts (12).

12. Filtervorrichtung nach einem der vorhergehenden Ansprüche, **dadurch gekennzeichnet, dass** als Strömungsbeeinflussungsvorrichtung (50) an einer der dem Spülgaseinlass (40) gegenüberliegenden schrägen Prallwand realisiert ist, die den auftreffenden Spülgasstrom nach unten, also von dem Bett (12) weg, leitet.

13. Filtervorrichtung nach einem der vorhergehenden Ansprüche, **dadurch gekennzeichnet, dass** für die Reinigung des Filters und das Abrauschen der Verdichtungsschicht des Katalysatormaterials ein Spülgasimpuls von einer Dauer bis 10 sek., insbesondere von etwa 5 sek., abgebbar ist.

14. Filtervorrichtung nach einem der vorhergehenden Ansprüche, **dadurch gekennzeichnet, dass** sie modular aufgebaut ist und ein Filterkasten (58) der Filtervorrichtung durch einen handelsüblichen Container gebildet ist; und/oder
dass dem mehrfach verunreinigten Rohgas, insbesondere vor dem Filterkasten (58), ein Reagenz wie Urea oder Natriumbikarbonat zugeführt wird.

15. Filtervorrichtung nach einem der vorhergehenden Ansprüche, **dadurch gekennzeichnet, dass** über mindestens einem Bett (12) ein Rohgas-Strömungsgleichrichter angeordnet ist, über welchen Verteilung der Gasströmung zwischen den Betten und/oder über jedes Bett betrachtet, vergleichmäßigbar ist, und welcher insbesondere verhindert, dass durch Strömungspeaks unverbrauchtes Katalysatormaterial über die Rückhaltewand geblasen wird.
